# EUROPEAN PATENT APPLICATION

(11) **EP 4 560 275 A1**
(43) Date of publication of application: **28.05.2025**
(21) Application number: 23211495.9
(22) Date of filing: 22.11.2023
(51) Int. Cl.: G01G 19/12

(54) **FEED MIXER**

(71) Applicant: Trioliet Holding B.V., 7575 BW Oldenzaal (NL)
(72) Inventor: Liet, Robert Jan, 7573 CS Oldenzaal (NL)
(74) Representative: Grünecker Patent- und Rechtsanwälte PartG mbB

(57) **Abstract**

Feed mixer (1) comprising a container (2), a support structure (3) and a weighing element (4), wherein the weighing element (4) is configured to be removably mounted to the support structure (3) such that it is arranged below the container (2) for measuring a weight of the container (2), and wherein the support structure (3) is configured to allow removal of the weighing element (4) by moving the weighing element (4) in a vertical direction (V) and/or by tilting the weighing element (4) in a vertical direction and/or by moving the weighing element (4) in a lateral direction (T).

## Description

### Field of the invention

The present invention relates to a feed mixer.

### Background

Feed mixers are generally known in the art. These machines typically comprise a container for feed stuffs and mixing means, e.g., augers, to mix the feed stuffs. Usually, feed mixers also comprise weighing means to determine the weight of the feed stuffs inside the feed mixer.

For example, US 10,458,837 B2 discloses an agricultural vehicle, where a container is mounted on axles of a train of wheels by way of at least two pairs of load cells. US 3,879,998 A describes a weighing apparatus for measuring loads comprising a longitudinal bar which is elastically deformable and is retained by bar supporting members at the center and at the ends of the bar. Strain gauges mounted between the center and the ends on both sides of the bar detect the deformation of the bar. The respective values given by the individual strain gauges may be used to determine a differential bending moment, allowing a determination of a weight without the influence of other extraneous forces.

The weighing elements in feed mixers, in particular pull-type or self-propelled feed mixers, are often subject to large amount of stress and wear due to the large forces acting on them during operation of the feed mixer. As such, regular maintenance and repair of the weighing elements may be necessary. However, in the prior art, performing such maintenance or fully replacing the weighing elements is often difficult and involves having to disconnect, e.g., the train of wheels from the container.

It is therefore the object of the present invention to provide an improved feed mixer, in particular a feed mixer for which the removal and/or exchange of weighing elements is easier.

### Summary of the invention

This object is achieved with a feed mixer according to claim 1. Further embodiments are set forth in the dependent claims.

The feed mixer comprises a container, a support structure, and a weighing element. The weighing element is configured to be removably mounted to the support structure such that it is arranged below the container for measuring a weight of the container. Further, the support structure is configured to allow removal of the weighing element by moving the weighing element in a vertical direction and/or by tilting the weighing element in a vertical direction and/or by moving the weighing element in a lateral direction.

It should be noted that a weight of the container may comprise the weight of the container itself and/or a weight of the contents of the container, e.g., feed stuffs.

The feed mixer may be a pull-type or a stationary feed mixer. It may also be a self-propelled or robotized feed mixer.

"Vertical" is used herein to indicate a direction that is normal to the ground on which the feed mixer is standing in normal operation. As such, the vertical direction is understood to be parallel to the direction of gravity. Accordingly, "tilting in a vertical direction" indicates a rotational movement around an axis which is normal to the vertical direction.

"Lateral" is used to refer to a direction that is normal to the vertical direction or, in other words, horizontal. More specifically, in the case of an elongated object, "lateral" indicates a direction that is normal to both the vertical direction and the longitudinal direction of the object, i.e., its direction of longest extension. In the case of a feed mixer, "lateral" typically indicates a direction that is normal to the vertical direction and normal to the longitudinal direction of the container. In a movable feed mixer, "lateral" may indicate a direction that is normal to the vertical direction and the driving direction of the feed mixer. "Lateral" may also relate to the weighing element, if it has an elongated shape. Thus, a lateral movement of the weighing element would indicate a movement of the weighing element in a direction that is normal to the vertical direction and normal to the longitudinal direction of the weighing element. It is to be noted that these definitions for "lateral" will usually coincide to indicate the same direction.

According to the invention, the removal of the weighing element from the support structure is possible in situ, i.e., without having to move or remove other parts of the feed mixer. In particular, the container or the set of wheels do not have to be removed or moved in order to remove the weighing element. It is, however, possible that ancillary supports are used to carry the weight of the container and its contents during a removal or exchange of the weighing element.

Thus, by providing a support structure and a weighing element, which allows the removal of the weighing element by moving the weighing element upwards in a vertical direction and/or by tilting the weighing element in a vertical direction and/or by moving the weighing element in a lateral direction, an easy way of exchanging the weighing element is provided.

The weighing element may comprise a double-ended weighbar, in particular a differential double-ended weighbar or a double-ended shearbeam weighbar. In particular, this means that the weighing element may comprise an elongated bar with strain sensors arranged on both sides of the bar's center. With such a weighing element, an accurate determination of the weight of the container and its contents is possible. The strain sensors may be glued to the elongated bar. The weighing element may comprise protective coverings for the sensors. The protective coverings may be provided as sleeves around the elongated bar. Seals may be provided between the protective coverings and the elongated bar, for example, in the form of O-rings. The space inside of the protective coverings, i.e., the space surrounded by the protective covering containing the sensors and possibly sealed by the seals, may further be filled with a potting substance. The potting substance may comprise a thermosetting plastic and/or a silicone rubber gel and/or an epoxy resin. The use of such protective coverings may protect the sensors from environmental influences, for example, moisture or dirt.

The support structure may comprise a first part and a second part, and the weighing element may be removably mounted between the first part and the second part. For example, the support structure may comprise two side parts extending in a vertical direction, wherein the weighing element may be removably mounted between the two side parts of the support structure. Here, the term "side part" refers to a part on a lateral side of the support structure.

In particular, the top of the support structure may be open. In other words, the support structure may comprise a fork-like structure or a structure that has a U-shaped profile. In this case, the weighing element can be lifted out of the support structure to remove it. This shape of the support structure may also allow a vertical tilting of the weighing element in such a way that it comes clear of the support structure and can then be removed.

The support structure may comprise a removable part, wherein the removable part is configured to be detached from the support element to allow a removal of the weighing element. The removable part may be the first part and/or the second part as mentioned above. Providing such a removable part means that, when it is fixed, the weighing element can be held fixedly in place in the support structure, while removing the part may allow direct access to the weighing element for removal.

The first part may be a first side part of the support structure and the second part may be a second side part of the support structure. The removable part may be the first side part or the second side part of the support structure. In this case, removing the removable part may allow removal of the weighing element merely by a lateral movement of the weighing element.

Additionally or alternatively, the first part may be an upper part of the support structure and the second part may be a lower part of the support structure, and the removable part of the support structure may be the upper part or the lower part of the support structure. For example, after removing the upper part, the weighing element may be lifted out of the support structure. For example, the support structure may comprise a horizontally split block into which the weighing element is clamped. It is also possible that the support structure comprises a block that is split along a plane which includes an angle with the horizontal plane, where the horizontal plane is parallel to the ground. The angle may, for example, be in the range of 1° to 90°, in particular in the range of 45° to 90°. In particular, the angle may be 90°, i.e., the block may be split vertically.

It is further possible that the support structure comprises at least one part extending in a vertical direction, i.e., a vertically extending support element, and that the weighing element may be removably mounted to the at least one vertically extending support element. For example, the weighing element may be mounted to the at least one side part via bolts and/or braces and/or clamps.

The weighing element may be configured to be removably mounted to the support structure via pins and/or bolts. In this way, a robust reversal fixing of the weighing element is possible.

An empty space or clearance may be provided between a bottom part of the container and the support structure, wherein the empty space or clearance is sufficient to lift and/or tilt the weighing element upwards out of the support structure. In particular, this empty space or clearance may be provided when the feed mixer is assembled an in operating condition. Thus, it may be possible to remove the weighing element without having to lift the container or dismount, for example, a train of wheels of the feed mixer.

Alternatively or additionally, it is possible that the weighing element is mounted inside the support structure such that a clearance is provided underneath the weighing element. Thus, for example after removal of a part of the support element, in particular a side part of the support element, it may be possible to move the weighing element downwards in a vertical direction and then remove the weighing element by moving it in a lateral direction. In particular, if the weighing element is mounted to the bottom of the container via a mounting element as described further below, the clearance may be sufficient to allow a movement of the weighing element downwards out of the mounting element during a removal process of the weighing element.

The weighing element may be configured to be mounted to the support structure by removably fixing a central part of the weighing element in the support structure. By fixing the weighing element in a central part, an equal distribution of the weight of the container along the weighing element can be achieved. Further, since the sensors of a double-ended differential weighbar are provided on both sides of the center of the bar, it is possible to use the center of the bar to fix it to the support structure without damaging or impacting the sensors.

The weighing element may further be configured to be removably mounted to the bottom of the container via a mounting element. In particular, the mounting element may connect the weighing element directly to the container. For example, the mounting element may comprise a beam running along the bottom of the container, and the weighing element may be connected to the beam with appropriate means, for example mounting brackets. In other words, the weighing element may be mounted to the bottom of the container via the mounting element without any sort of intermediate chassis. Thus, the feed mixer can be constructed in a compact way.

The mounting element may comprise a first mounting bracket and a second mounting bracket, wherein the first mounting bracket and the second mounting bracket are attached to the bottom of the container, and wherein the weighing element may be configured to be removably mounted to the bottom of the container by removably fixing a first end of the weighing element in the first mounting bracket and by removably fixing a second end of the weighing element in the second mounting bracket attached to the bottom of the container. The mounting brackets may be attached to a beam running along the bottom of the container. Alternatively, the mounting brackets may be attached directly to the bottom of the container. The mounting brackets may be attached to the beam or to the bottom of the container removably, for example, via bolts. Alternatively, the mounting brackets may be attached to the beam or to the bottom of the container by welding.

If the weighing element is mounted inside the support structure such that a clearance is provided underneath the weighing element as described further above, the clearance may be sufficient to allow a movement of the mounting element downwards such that its ends are clear of the mounting brackets during a removal process of the weighing element.

In particular, the first mounting bracket and the second mounting bracket may be arranged symmetrical with respect to the support structure along a longitudinal direction of the feed mixer. In other words, the first and second support structures are arranged symmetrical to a plane, which is normal to the longitudinal direction, this plane passing through the center of the weighing element. This way, an even distribution of the weight of the container on the weighing element and its content may be achieved.

The first and/or the second mounting bracket may comprise a removable part. In particular, a side part, i.e., a part on a lateral side, of the first and/or the second mounting bracket may be removable. This way, the weighing element may be removed by a lateral movement from the mounting brackets.

Alternatively or additionally, the first and/or second mounting bracket may comprise a side part which comprises a vertical part and a horizontal part. The vertical part may extend primarily along the vertical direction, whereas the horizontal part may extend out from the vertical part along a horizontal direction, in particular along the longitudinal direction of the container or the weighing element. For example, when viewed from a lateral direction of the feed mixer, the first and/or second mounting brackets may have an L-shape. The weighing element may be fixed in the horizontal part of the side part, in particular such that it does not extend into the vertical part. This way, the weighing element may be moved in a vertical direction to remove it from the support structure and the mounting brackets. It is to be noted that the first and/or second mounting brackets may be open at the top in the region of the horizontal part. Alternatively, the first and/or second mounting brackets may comprise a removable top part in the region of the horizontal part.

The feed mixer may further comprise a set of wheels, wherein the support structure is arranged between the container and the set of wheels. The set of wheels may be mounted on one or more axles. In particular, the one or more axles may comprise a tandem axle. The tandem axle may be a central pivot tandem axle.

### Brief description of the drawings

Advantageous embodiments will now be described in combination with the enclosed figures.
- Figure 1: schematically shows a feed mixer in a side view;
- Figure 2: schematically shows a feed mixer in a bottom view;
- Figures 3 to 9: schematically show a weighing element and a support structure in a perspective view;
- Figures 10a to 10c: schematically show a support structure in a cut view; and
- Figures 11a and 11b: schematically show a support structure in a side view.

### Detailed description of the invention

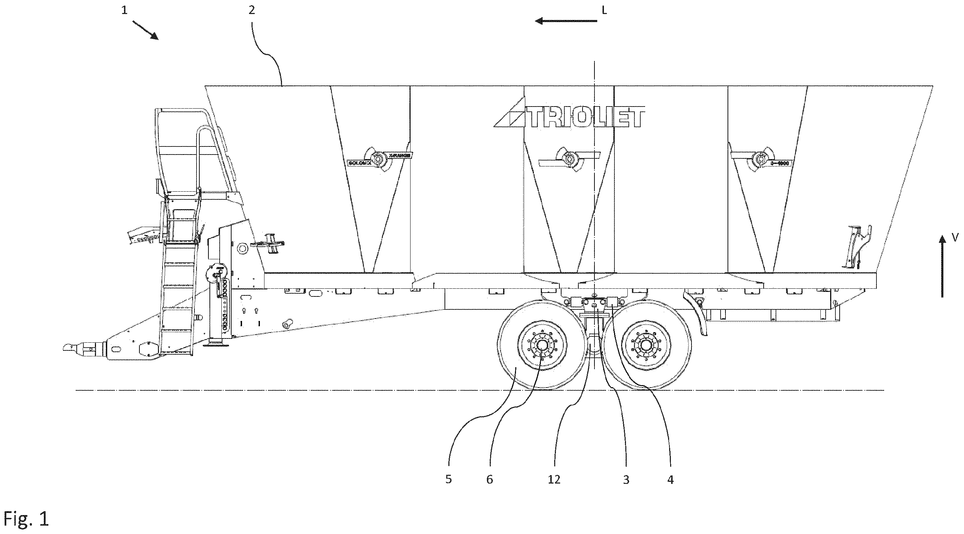

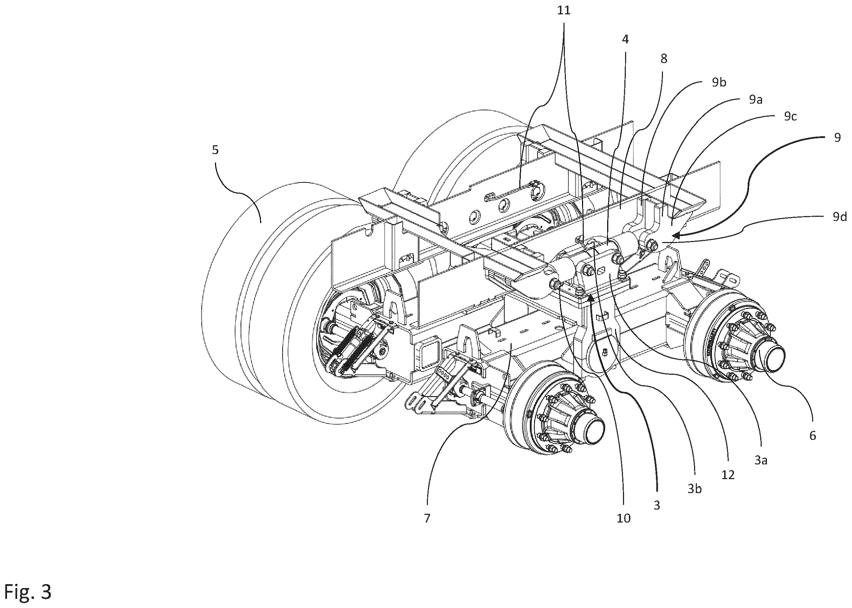

Figure 1 schematically shows a feed mixer 1 in a side view, i.e., viewed from a lateral direction. The feed mixer 1 comprises a container 2, which rests on a central pivot tandem axle 6 of a set of wheels 5. A support structure 3 is arranged on top of the central pivot tandem axle 6, and a weighing element 4 is mounted in the support structure 3. It can be seen in Figure 1 that the weight of the container 2 is transferred to the central pivot tandem axle 6 via the weighing element 4 mounted in the support structure 3 such that the weight of the container 2 can be measured by the weighting element 4. The weighing element 4 comprises a double-ended differential weighbar, which is shown in more detail in Figures 3 to 7. It can be seen that there is no intermediate chassis between the weighing element 4 and the container 2. Figure 1 also indicates a vertical direction V and a longitudinal direction L.

In the embodiment shown in Figure 1, a further weighing element (not shown) is arranged between the drawbar and the tow-hook hitch in order to measure the weight portion pressing on the drawbar.

While the feed mixer 1 illustrated in Figure 1 is a movable feed mixer, it is to be noted that the combination of the weighing element 4 and the support structure 3 may also be used in stationary feed mixers. In these feed mixers, the support structure 3 would be arranged on top of a stationary support.

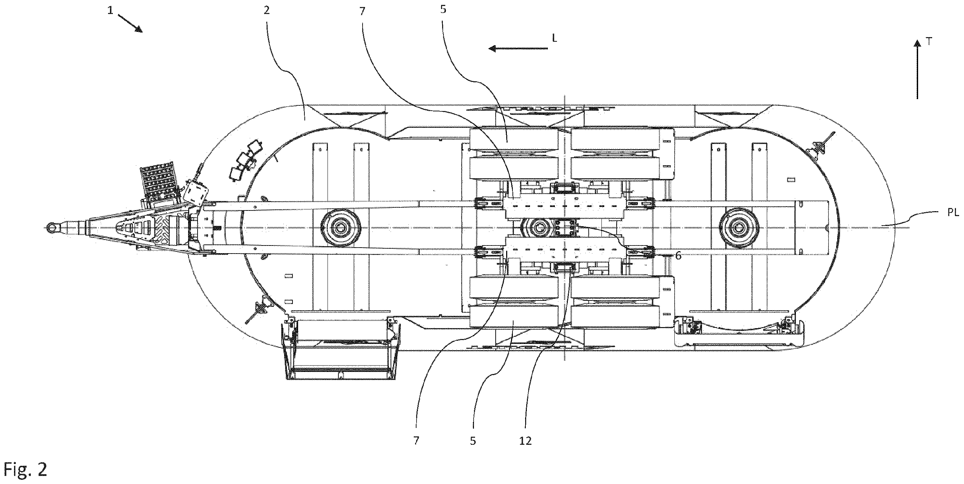

Figure 2 shows the feed mixer 1 illustrated in Figure 1 in a bottom view. It can be seen in Figure 2 that the set of wheels 5 comprises two pairs of wheels arranged symmetrically with respect to a longitudinal plane PL of the feed mixer 1. In the embodiment shown in Figure 2, two beams 7 pivotally mounted in a cross beam 12 of the central pivot tandem axle 6 each serve as mounting points for the support structure 3 and the weighing element 4 (not visible in Figure 2). As can be seen, thus, the weight of the container 2 and its content is transferred via the weighing elements 4 and the respective support structures 3 and via the central pivot cross beam 12 to the beams 7 and into the set of wheels. Figure 2 also indicates the longitudinal direction L and a lateral direction T.

Figure 3 shows a part of an embodiment of a feed mixer 1. In particular, Figure 3 shows the support structure 3 and the weighing element 4 in a perspective view. In Figure 3, the weighing element 4 is shown mounted inside the support structure 3, which is mounted on top of the central cross beam 12 of the central pivot tandem axle 6.

It can be seen that the weighing element 4, which is a double-ended differential weighbar or shearbeam, is fixed inside the support structure 3 in a central part of weighing element 4 with bolts 10. The support structure 3 comprises a first part 3a and a second part 3b, which in the illustrated embodiment are side parts of the support structure 3. It can be seen that the side parts are not connected at the top, such that the support structure 3 is open at its top. Thus, the weighing element 4 can be lifted out of the support structure 3. Analogously, the weighing element 4 can be inserted into the support structure 3 from the top. Figure 3 further shows that there is an empty space provided above the support structure 3, which is sufficient to lift the weighing element 4 out of the support structure 3.

The two end parts of the weighing element 4 are fixed with bolts 10 inside mounting brackets 9, which are affixed via crossbeams 8 to the bottom of the container. Like the support structure 3, the mounting brackets 9 each comprise two side parts 9a and 9b. Each side part 9a, 9b comprises a vertical part 9c and a horizontal part 9d, the horizontal part 9d extending in a longitudinal direction outwards from the vertical part 9c. In other words, when viewed from the side or lateral direction, the mounting brackets 9 have an L-shaped profile.

It can be seen that the end parts of the weighing element 4 are mounted in the horizontal parts 9d of the mounting brackets 9. The side parts 9a and 9b of the mounting brackets 9 are not connected at their respective horizontal parts 9d, such that the a channel is formed between the side parts 9a and 9b through which the weighing element 4 can be lifted out of the mounting brackets 9 or inserted into the mounting brackets 9 from the top. It can be seen that, if the weighing element 4 is lifted out of the mounting brackets 9, there is enough space between the vertical parts 9c of the mounting brackets 9 to move the weighing element 4 in a lateral direction.

It is to be noted that, while Figure 3 shows that both side parts 9a and 9b of the mounting brackets 9 comprise vertical parts 9c and horizontal parts 9b, it may be sufficient if only one of the side parts is shaped like this, if access to the weighing element 4 is only needed from one side.

Figure 3 further shows that cables 11 for the readout of the weighing element 4 are guided to the middle of the feed mixer. It can be seen that cables 11 also extend from a second weighing element that is located next to the wheels in the back of Figure 3, but which is not visible in Figure 3. The cables 11 may be connected to a junction box, a controller or computer (not shown).

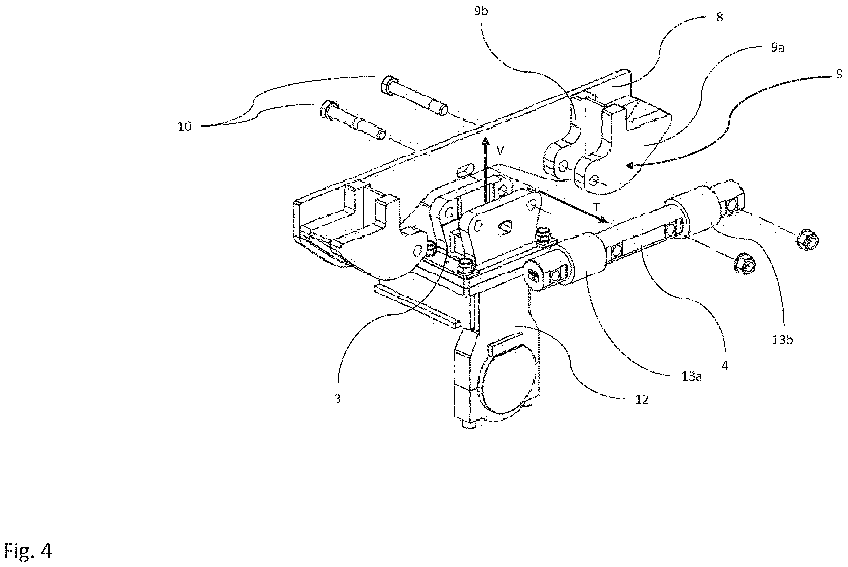

Figure 4 illustrates removal of the weighing element 4 from the support structure 3 and the mounting brackets 9 in the embodiment of Figure 3. In particular, Figure 4 shows the situation after the weighing bar 4 has been removed from the support structure 3 and the mounting brackets 9. In order to arrive at the situation shown in Figure 4 when starting from the situation shown in Figure 3, the following steps are performed: First, the bolts 10 fixing the weighing element 4 in the support structure 3 and the mounting brackets 9 are removed. Next, the weighing element 4 is lifted in a vertical direction V, as indicated by the corresponding arrow. Thus, the weighing element 4 is moved to the empty space provided above the support element 3. Then, the weighing element 4 can be moved in a lateral direction T as indicated by the corresponding arrow. For mounting the weighing element 4, these steps are performed in reverse order.

Figure 4 also illustrates that protective coverings 13a and 13b housing strain sensors are provided on both sides of the center of the weighing element 4.

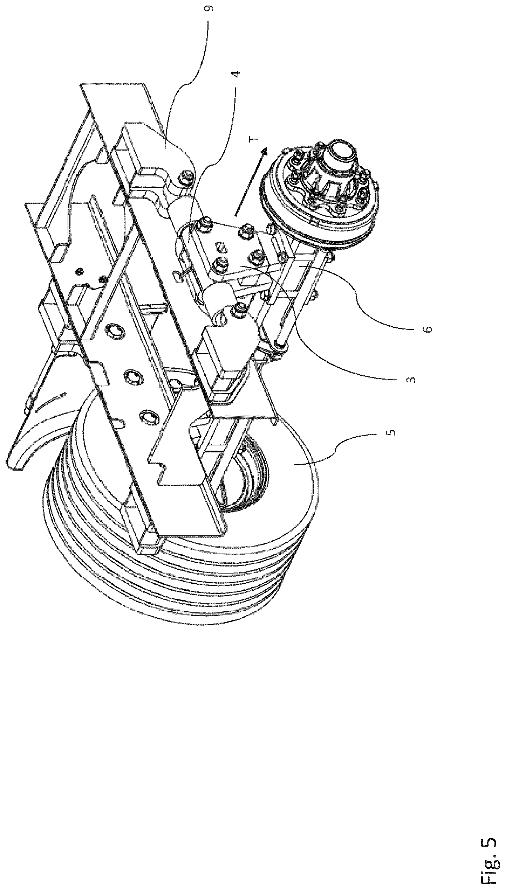

Figure 5 shows a part of another embodiment of a feed mixer in perspective view. The embodiment shown in Figure 5 differs from the embodiment shown in Figures 3 and 4 in that the axle 6 supporting the set of wheels 5 is a single axle. It can be seen that, in this embodiment, the support structure 3 is mounted directly on the single axle 6. Further, the mounting brackets 9 are mounted or welded directly to the bottom of the container. For this embodiment, mounting and removal of the weighing element 4 is performed analogous as for the embodiment shown in Figures 3 and 4.

Figure 5 also shows that the weighing element 4 is fixed in the support structure in such a way that there is a clearance provided below the weighing element 4. Further, it is possible that a first part 3a of the support element 3 is removable. Thus, after removal of the first part 3a, the weighing element 4 may be lowered in a vertical direction such that its ends are clear of the mounting brackets 9. Afterwards, the weighing element 4 may be removed by a moving it in lateral direction T.

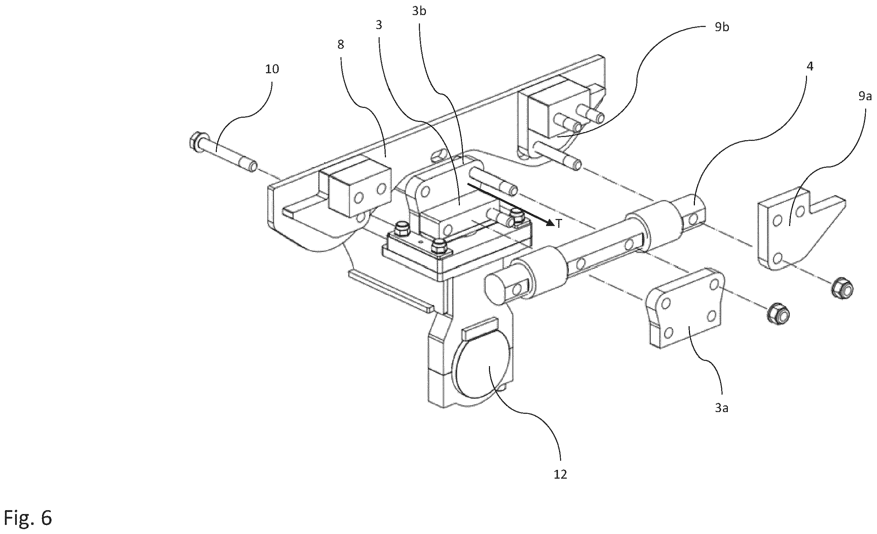

Figure 6 shows a part of another embodiment of a feed mixer in perspective view. The embodiment shown in Figure 6 differs from the embodiment shown in Figures 3 and 4 in that the first part 3a of the support structure 3 and the side part 9a of the mounting brackets 9 are removable. Thus, after removing the parts 3a and 9a, the weighing element 4 may directly be moved in a lateral direction T, as indicated by the corresponding arrow. It can be seen that in this embodiment, the mounting brackets 9 may have a more simple shape than the L-shape shown in Figures 3 and 4.

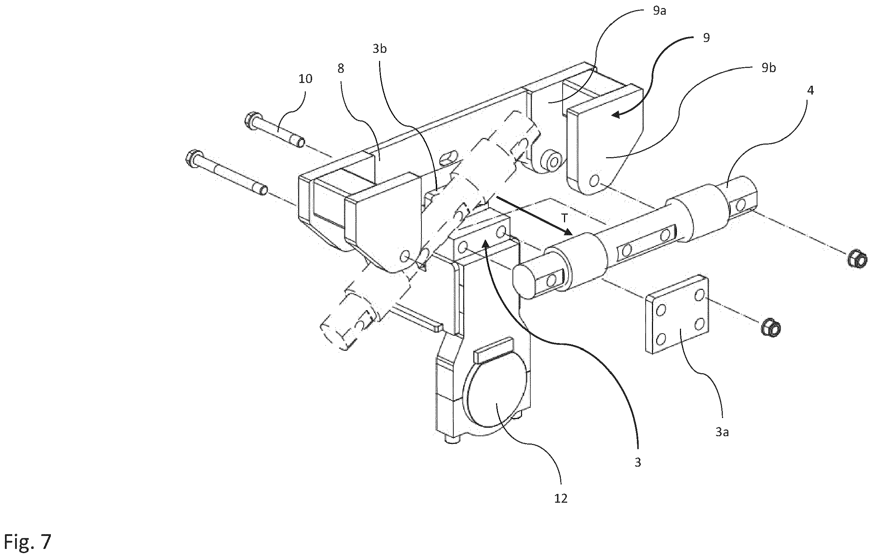

Figure 7 shows a part of another embodiment of a feed mixer in perspective view. The embodiment shown in Figure 7 differs from the embodiment shown in Figures 3 and 4 in that the first part 3a of the support structure 3 is removable. Unlike in the embodiment shown in Figure 6, the side parts 9a of the mounting brackets are not removable. In order to remove the weighing element 4 from the support structure 3 and the mounting brackets 9, in this embodiment, the following steps are performed: After removing the first part 3a of the support structure 3 and the bolts 10, the weighing element 4 is rotated in a vertical direction, i.e., around an axis pointing in lateral direction T. The intermediate position of the weighing element 4 after rotation is shown by the dashed outlines of the weighing element 4 in Figure 7. It can be seen that in this intermediate position, the left end of the weighing element 4 is below the left mounting bracket 9 and the right end of the weighing element 4 is outside of the right mounting bracket 9. Thus, the weighing element 4 can then be moved in a lateral direction T to remove it. For mounting the weighing element 4, these steps are performed in reverse order.

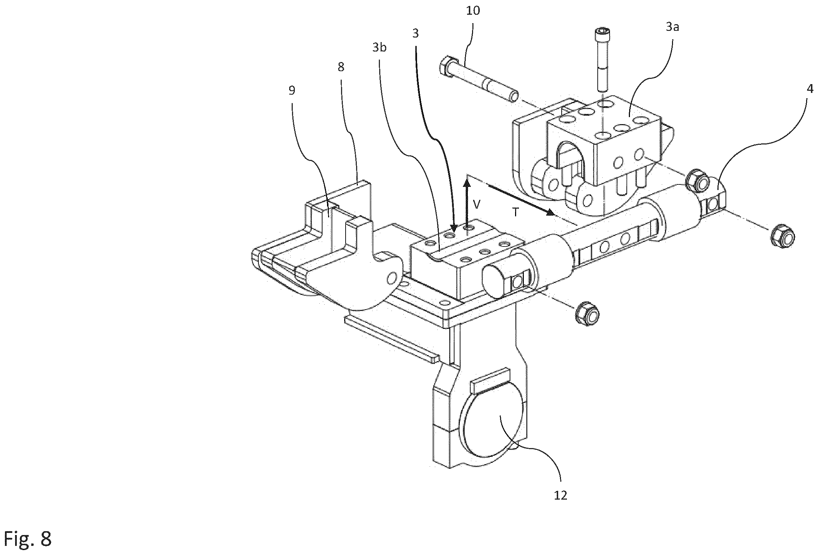

Figure 8 shows a part of another embodiment of a feed mixer in perspective view. The embodiment shown in Figure 8 differs from the embodiment shown in Figures 3 and 4 in that the first part 3a is an upper part of the support structure 3, and the second part 3b is a bottom part of the support structure 3. In the embodiment shown in Figure 8, the support structure 3 comprises a horizontally split block with a bore for holding the weighing element 4. The first part 3a, i.e., the upper part of the block is removable. To remove the weighing element 4, the following steps are performed: First, the first part 3a of the support structure 3 is removed. Then, the same steps as described with reference to Figure 4 above are performed: The weighing element 4 is lifted in vertical direction V such that it is in the empty space above the support structure 3. Then, the weighing element 4 is moved in a lateral direction T to remove it. For mounting the weighing element 4, the steps are performed in reverse order.

While Figure 8 shows the mounting brackets 9 to be of the same type as those illustrated in Figures 3 and 4, it is also possible to combine the version of the support structure 3 shown in Figure 8 with the mounting brackets shown in Figures 6 and 7.

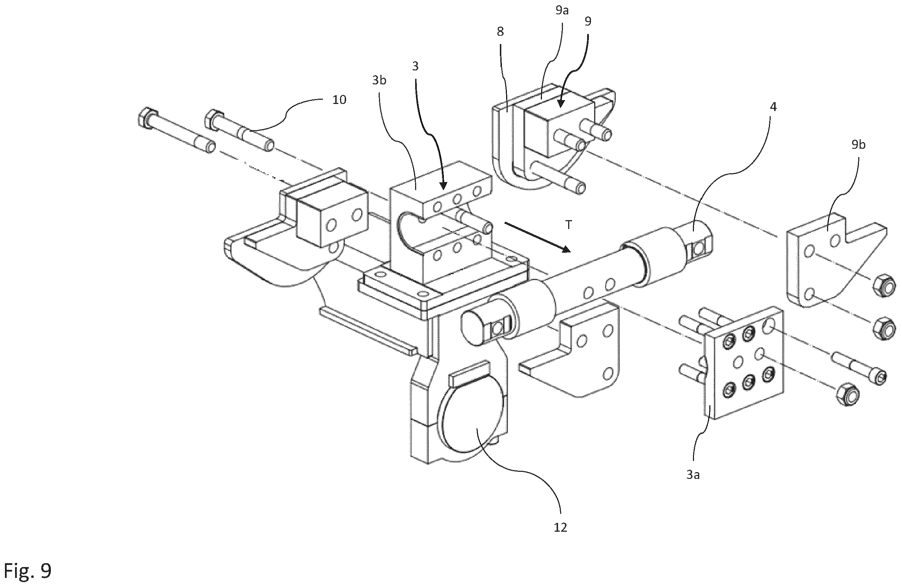

Figure 9 shows a part of another embodiment of a feed mixer in perspective view in perspective view. As in the embodiment shown in Figure 8, the support structure 3 comprises a split block. However, in the embodiment shown in Figure 9, the block is split along a plane that includes an angle with the horizontal plane, where the horizontal plane is parallel to the ground. In the embodiment shown in Figure 9, this angle is 90°. It is to be noted that this angle is merely exemplary, and may be any angle between 1° and 90°, in particular between 45° and 90°.

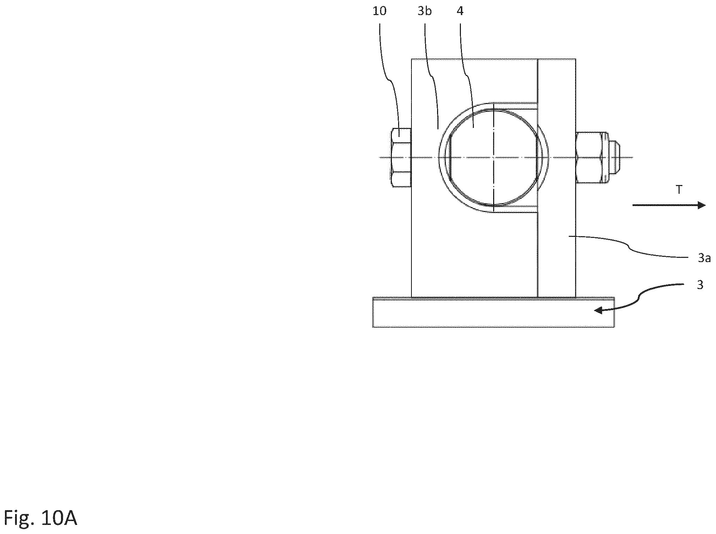

Figures 10a to 10c schematically show further embodiments of support structures in a cut view. For reference, the lateral direction T and vertical direction V are indicated with respective arrows.

In the embodiment shown in Figure 10a, the support element 3 comprises a block that is split along a vertical plane. In this case, the first part 3a of the support element 3 is removably fixed to the second part 3b with bolts. Weighing element 4 is mounted in between parts 3a and 3b.

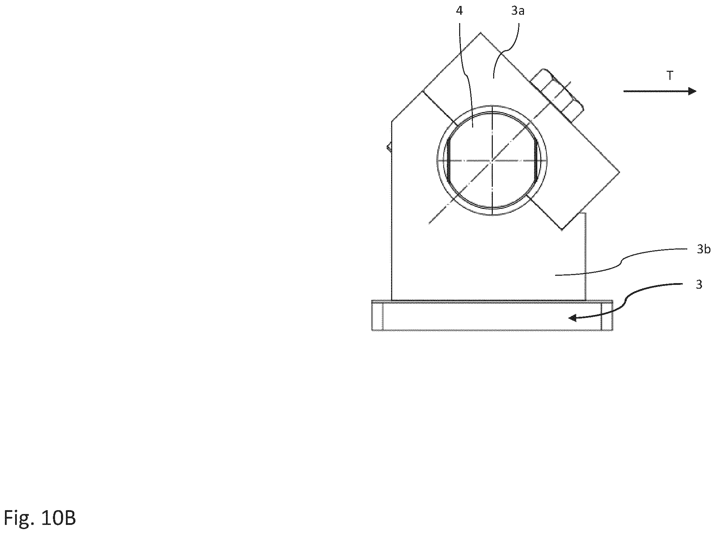

In the embodiment shown in Figure 10b, the support element 3 comprises a block that is split along a plane that includes an angle of 45° with the horizontal plane. Also in this embodiment, the first part 3a of the support element 3 is removably fixed to the second part 3b with bolts, and weighing element 4 is mounted in between parts 3a and 3b.

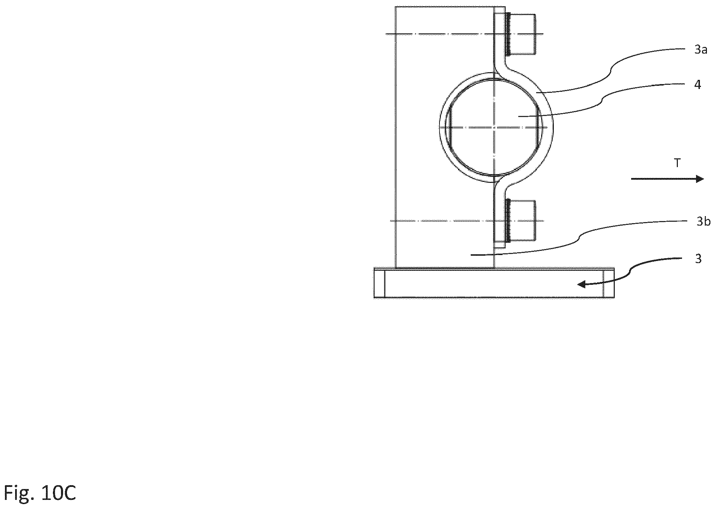

In the embodiment shown in Figure 10c, the first part 3a of the support element 3 comprises at least one brace or clamp, and the second part 3b of the support element 3 comprises a side part. The at least brace or clamp is removably fixed to the side part with bolts, and weighing element 4 is mounted in between the brace or clamp and the side part.

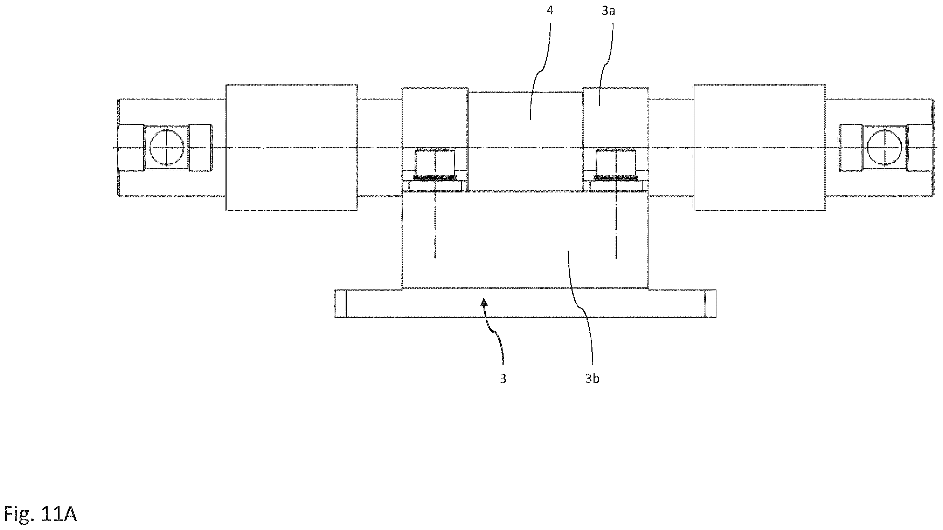

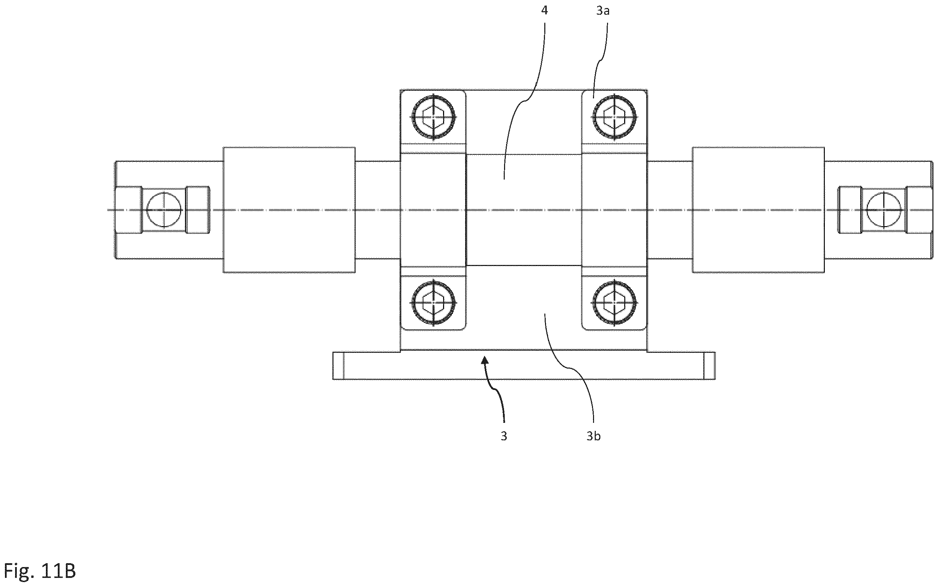

Figures 11a and 11b schematically show embodiments of support structures in a side view.

In the embodiment shown in Figure 11a, the first part 3a of the support element 3 comprises two clamps or braces that are fixed from the top to the second part 3b of the support element. The clamps or braces the second part 3b via bolts. Removing the bolts allows the clamps or braces to be removed for removal of the weighing element 4.

The embodiment shown in Figure 11b is similar to the embodiment shown in Figure 10c: The first part 3a of the support element 3 comprises at two braces or clamps, and the second part 3b of the support element 3 comprises a side part. The two braces or clamps are removably fixed to the side part with bolts, and weighing element 4 is mounted in between the braces or clamps and the side part.

Although the previously discussed embodiments and examples of the present invention have been described separately, it is to be understood that some or all of the above-described features can also be combined in different ways. The above discussed embodiments are particularly not intended as limitations, but serve as examples, illustrating features and advantages of the invention.

## Claims

1. Feed mixer (1) comprising:
a container (2);
a support structure (3); and
a weighing element (4);
wherein the weighing element (4) is configured to be removably mounted to the support structure (3) such that it is arranged below the container (2) for measuring a weight of the container (2), and
wherein the support structure (3) is configured to allow removal of the weighing element (4) by moving the weighing element (4) in a vertical direction (V) and/or by tilting the weighing element (4) in a vertical direction and/or by moving the weighing element (4) in a lateral direction (T).

2. Feed mixer (1) according to claim 1,
wherein the weighing element (4) comprises a double-ended weighbar, in particular a differential double-ended weighbar or a double-ended shearbeam weighbar.

3. Feed mixer (1) according to any of the preceding claims,
wherein the support structure (3) comprises a first part (3a) and a second part (3b), and wherein the weighing element (4) is removably mounted between the first part (3a) and the second part (3b).

4. Feed mixer (1) according to claim 3,
wherein the support structure (3) comprises a removable part,
wherein the removable part is configured to be detached from the support structure (3) to allow a removal of the weighing element (4), and
wherein the removable part is the first part (3a) and/or the second part (3b).

5. Feed mixer (1) according to claim 4, wherein the first part (3a) is a first side part of the support structure and the second part (3b) is a second side part of the support structure (2).

6. Feed mixer (1) according to claim 4, wherein the first part (3a) is a upper part of the support structure and the second part (3b) is a lower part of the support structure (2).

7. Feed mixer (1) according to any of the preceding claims,
wherein the weighing element (4) is configured to be removably mounted in the support structure (3) via pins and/or bolts (10).

8. Feed mixer (1) according to any of the preceding claims,
wherein a clearance is provided between a bottom part of the container (2) and the support structure (3), wherein the clearance is sufficient to lift and/or tilt the weighing element (4) upwards out of the support structure (3), and/or
wherein a clearance is provided underneath the weighing element (4) when it is mounted to the support structure (3).

9. Feed mixer (1) according to any of the preceding claims,
wherein the weighing element (4) is configured to be mounted to the support structure (3) by removably fixing a central part of the weighing element (4) in the support structure (3).

10. Feed mixer (1) according to claim 9,
wherein the weighing element (4) is further configured to be removably mounted to the bottom of the container (2) via a mounting element.

11. Feed mixer (1) according to claim 10,
wherein the mounting element comprises a first mounting bracket (9) and a second mounting bracket (9), wherein the first mounting bracket (9) and the second mounting bracket (9) are attached to the bottom of the container, and
wherein the weighing element (4) is configured to be removably mounted to the bottom of the container by removably fixing a first end of the weighing element (4) in the first mounting bracket (9) and by removably fixing a second end of the weighing element (4) in the second mounting bracket (9) attached to the bottom of the container.

12. Feed mixer (1) according to claim 11,
wherein the first mounting bracket (9) and the second mounting bracket (9) are arranged symmetrical with respect to the support structure (3) along a longitudinal direction (L) of the feed mixer (1).

13. Feed mixer (1) according to any of the preceding claims,
further comprising a set of wheels (5), wherein the support structure (3) is arranged between the container and the set of wheels (5).

14. Feed mixer (1) according to any of the preceding claims,
wherein the set of wheels (5) is mounted on one or more axles (6).

15. Feed mixer (1) according to claim 14,
wherein the one or more axles (6) comprise a tandem axle.

## Amended claims

### Amended claims in accordance with Rule 137(2) EPC.

1. Feed mixer (1) comprising:
a container (2);
a support structure (3); and
a weighing element (4);
wherein the weighing element (4) is configured to be removably mounted to the support structure (3) such that it is arranged below the container (2) for measuring a weight of the container (2), and
wherein the support structure (3) is configured to allow removal of the weighing element (4) in situ by moving the weighing element (4) in a vertical direction (V) and/or by tilting the weighing element (4) in a vertical direction and/or by moving the weighing element (4) in a lateral direction (T).

2. Feed mixer (1) according to claim 1,
wherein the weighing element (4) comprises a double-ended weighbar, in particular a differential double-ended weighbar or a double-ended shearbeam weighbar.

3. Feed mixer (1) according to any of the preceding claims,
wherein the support structure (3) comprises a first part (3a) and a second part (3b), and wherein the weighing element (4) is removably mounted between the first part (3a) and the second part (3b).

4. Feed mixer (1) according to claim 3,
wherein the support structure (3) comprises a removable part,
wherein the removable part is configured to be detached from the support structure (3) to allow a removal of the weighing element (4), and
wherein the removable part is the first part (3a) and/or the second part (3b).

5. Feed mixer (1) according to claim 4, wherein the first part (3a) is a first side part of the support structure and the second part (3b) is a second side part of the support structure (2).

6. Feed mixer (1) according to claim 4, wherein the first part (3a) is a upper part of the support structure and the second part (3b) is a lower part of the support structure (2).

7. Feed mixer (1) according to any of the preceding claims,
wherein the weighing element (4) is configured to be removably mounted in the support structure (3) via pins and/or bolts (10).

8. Feed mixer (1) according to any of the preceding claims,
wherein a clearance is provided between a bottom part of the container (2) and the support structure (3), wherein the clearance is sufficient to lift and/or tilt the weighing element (4) upwards out of the support structure (3), and/or
wherein a clearance is provided underneath the weighing element (4) when it is mounted to the support structure (3).

9. Feed mixer (1) according to any of the preceding claims,
wherein the weighing element (4) is configured to be mounted to the support structure (3) by removably fixing a central part of the weighing element (4) in the support structure (3).

10. Feed mixer (1) according to claim 9,
wherein the weighing element (4) is further configured to be removably mounted to the bottom of the container (2) via a mounting element.

11. Feed mixer (1) according to claim 10,
wherein the mounting element comprises a first mounting bracket (9) and a second mounting bracket (9), wherein the first mounting bracket (9) and the second mounting bracket (9) are attached to the bottom of the container, and
wherein the weighing element (4) is configured to be removably mounted to the bottom of the container by removably fixing a first end of the weighing element (4) in the first mounting bracket (9) and by removably fixing a second end of the weighing element (4) in the second mounting bracket (9) attached to the bottom of the container.

12. Feed mixer (1) according to claim 11,
wherein the first mounting bracket (9) and the second mounting bracket (9) are arranged symmetrical with respect to the support structure (3) along a longitudinal direction (L) of the feed mixer (1).

13. Feed mixer (1) according to any of the preceding claims,
further comprising a set of wheels (5), wherein the support structure (3) is arranged between the container and the set of wheels (5).

14. Feed mixer (1) according to any of the preceding claims,
wherein the set of wheels (5) is mounted on one or more axles (6).

15. Feed mixer (1) according to claim 14,
wherein the one or more axles (6) comprise a tandem axle.
